(19) Europäisches Patentamt

European Patent Office

Office européen des brevets

(11) Veröffentlichungsnummer: **0 226 758**
**A1**

(12) # EUROPÄISCHE PATENTANMELDUNG

(21) Anmeldenummer: 86114925.0

(22) Anmeldetag: 27.10.86

(51) Int. Cl.⁴: **A23K 3/00**

Die Bezeichnung der Erfindung wurde geändert (Richtlinien für die Prüfung im EPA, A-III, 7.3).

(30) Priorität: 16.11.85 DE 3540771

(43) Veröffentlichungstag der Anmeldung:
01.07.87 Patentblatt 87/27

(84) Benannte Vertragsstaaten:
BE CH DE FR GB IT LI NL

(71) Anmelder: BASF Aktiengesellschaft
Carl-Bosch-Strasse 38
D-6700 Ludwigshafen(DE)

(72) Erfinder: Kiefer, Hans, Dr.
Im Sandgarten 5
D-6706 Wachenheim(DE)
Erfinder: Bipp, Hansjoerg, Dr.
Hockenheimer Strasse 15
D-6703 Limburgerhof(DE)
Erfinder: Fink, Fritz
Kantstrasse 8
D-6703 Limburgerhof(DE)
Erfinder: Jaedicke, Hagen, Dr.
Anglerstrasse 38
D-6700 Ludwigshafen(DE)
Erfinder: Poralla, Dieter M.
Rieslingweg 17
D-6706 Wachenheim(DE)

(54) **Propandiolformiate enthaltendes Futtermittel oder Tränkwasser für Tiere.**

(57) Es wird vorgeschlagen ein Futtermittel oder Tränkwasser für Tiere, das dadurch gekennzeichnet ist, daß es eine biozid oder biostatisch wirksame Menge an mindestens einem Ameisensäureester des 1,2-Propandiols enthält.

EP 0 226 758 A1

## Propandiolformiate

Die Erfindung betrifft ein Futtermittel bzw. Tränkwasser für Tiere, das eine biozid oder biostatisch wirksame Menge eines Ameisensäurederivates enthält. Die Erfindung betrifft auch ein Mittel, enthaltend mindestens ein Ameisensäurederivat bzw. die Verwendung von Ameisensäurederivaten in Futtermitteln oder Tränkwasser für Tiere.

Seit langem ist bekannt, daß verschiedene organische Säuren (z.B. Propionsäure, Ameisensäure) sowie Salze dieser Säuren (z.B. Natriumpropionat, Calciumformiat und Ammoniumpropionat) eine biozide und/oder biostatische Wirkung besitzen, so daß einige dieser Substanzen eine große Verbreitung als Konservierungsstoffe für Futtermittel gefunden haben. Ziel dieser Maßnahmen ist die Reduzierung oder Ausschaltung von Mikroorganismen (Pilze und Bakterien) in Futtermitteln, weil diese eine Qualitätsminderung der Futtermittel bewirken und den tierischen Organismus belasten bzw. zu erheblichen Leistungsminderungen der Tiere führen können.

Manche Schad-Bakterien werden von den Tieren weniger über das Futter als über andere Quellen aus der Umgebung aufgenommen (z.B. als Folge der Koprophagie) oder sind ubiquitäre Verdauungstrakt-Bewohner, z.B. coliforme Keime, die sich unter speziellen Bedingungen unkontrolliert entwickeln können und oftmals verantwortlich sind für Diarrhoe. Auch gegen solche Mikroorganismen sind die genannten organischen Säuren sowie Salze dieser Säuren wirksam.

Bei Verwendung der reinen Säuren werden jedoch Lagerung und Anwendung erschwert durch ihre korrosive und hautätzende Wirkung sowie durch ihren starken, unangenehmen Geruch. Die pulverförmigen oder auch flüssigen Salze dieser Säuren sind zwar nicht mit diesen Nachteilen des schwierigen Handlings behaftet; sie verursachen jedoch in der Anwendung höhere Kosten und sind wegen ihrer geringeren Wirkstoff-Konzentration oder wegen ihres höheren pH-Wertes weniger effizient.

Der Erfindung liegt die Aufgabe zugrunde, ein Futtermittel bzw. Tränkwasser für Tiere bereitzustellen, das eine biozid oder biostatisch wirksame Menge eines Ameisensäurederivates enthält. Hierbei sollen insbesondere die Nachteile, welche sich nach dem Stand der Technik bei der Verwendung der freien Säuren ergeben, vermieden und gleichzeitig das Wachstum schädlicher Mikroorganismen gehemmt bzw. deren Anzahl reduziert werden.

Diese Aufgabe wird gelöst mit einem Futtermittel bzw. Tränkwasser für Tiere der eingangs genannten Art, das dadurch gekennzeichnet ist, daß es eine biozid oder biostatisch wirksame Menge an mindestens einem Ameisensäureester des 1,2-Propandiols enthält.

Nach einer bevorzugten Ausführungsform der Erfindung enthält das Futtermittel bzw. Tränkwasser mindestens einen der folgenden Ameisensäureester
1,2-Propandiolbisformiat,
1,2-Propandiol-1-formiat,
1,2-Propandiol-2-formiat.

Nach einer weiteren bevorzugten Ausführungsform enthält das Futtermittel bzw. Tränkwasser zusätzlich 1,2-Propandiol.

Besonders bevorzugt ist ein Futtermittel bzw. Tränkwasser, das in Mischung 1,2-Propandiolbisformiat, 1,2-Propandiol-1-formiat, 1,2-Propandiol-2-formiat und 1,2-Propandiol enthält.

Die Erfindung betrifft auch eine Mischung der genannten Bestandteile als Zusatz zu Futtermittel oder Tränkwasser. Die Mischung umfaßt mindestens einen Ameisensäureester des 1,2-Propandiols. Besonders bevorzugt umfaßt die Mischung die vier zuvor genannten Bestandteile.

Es ist ferner bevorzugt, daß das Futtermittel bzw. Tränkwasser zusätzlich Ameisensäuremono-, di-oder -triglycerinester, einzeln oder in Mischung, enthält.

Die Erfindung betrifft schließlich die Verwendung der obigen Mischung in Futtermittel bzw. Tränkwasser für Tiere.

Besonders bevorzugt ist eine erfindungsgemäße Mischung, die erhältlich ist durch Carbonylierung von 1,2-Propandiol.

Es wurde überrachend festgestellt, daß die technisch besonders günstig verfügbaren 1,2-Propandiolformiate, die 1,2-Propandiol und dessen Ameisensäureester enthalten, besonders gut gegen coliforme Bakterien (Escherichia Coli, Proteus vulgaris und Serrabia spp.) wirken. Gleichzeitig haben diese Substanzen gegenüber bekannten Stoffen ähnlicher Zielsetzung folgende Vorteile:

Sie wirken nicht korrosiv auf Eisen (Normalstahl, Kesselblech H 1) und sind indifferent gegenüber den meisten Kunststoffen.

Futtermittel, die mit den erfindungsgemäßen Substanzen behandelt werden, können in nicht-korrosionsgeschützten Behältern oder Räumen gelagert werden.

2

Die erfindungsgemäß einzusetzenden Substanzen bzw. deren Mischungen weisen nur einem sehr - schwachen Eigengeruch auf und wirken nicht hautätzend. Sie lassen sich problemlos dosieren und verarbeiten, auch bei Temperaturen um 0°C, und sind unbegrenzbar mit Wasser mischbar.

Die Herstellung gelingt nach prinzipiell bekannten Veresterungsmethoden eines Alkohols mit einer Carbonsäure, z.B. durch azeotrope Entfernung des Reaktionswassers. Zur Herstellung der Substanzen bzw. Mischungen setzt man besonders vorteilhaft 1,2-Propandiol mit Kohlenmonoxid unter erhöhtem Druck um.

Das erfindungsgemäße Mittel kann auch Ester der Ameisensäure mit Glycerin enthalten. Hierbei kann es sich um Mono-, Di-und Triester handeln. Mono-und Diester können in jeweils beiden stellungsisomeren Formen vorliegen (1-oder 2-Monoester und 1,2-oder 1,3-Diester). Bevorzugt enthält das Mittel Gemische der genannten Glycerinester.

Die Substanzen bzw. Mischungen aus 1,2-Propandiol und dessen Ameisensäureestern eignen sich zur Einmischung in Futtermittel aller Art in Aufwandmengen von 0,1 bis 2 Gew.%. Sie sind insbesondere geeignete zur Einmischung in Mischfuttermittel in Mengen von 0,3 bis 2, besonders bevorzugt 0,2 bis 2 Gew.%, sowie als Zusatz zum Tränkwasser in Aufwandmengen von insbesondere 0,1 bis 1,5, besonders bevorzugt 0,2 bis 1,5 Gew.% und zu Flüssigfuttermitteln in Aufwandmengen von 0,3 bis 2, insbesondere 0,2 bis 1,5 Gew.%; im allgemeinen genügt ein Zusatz bis 2 Gew.%, man kann prinzipiell aber auch höher gehen. Zweckmäßigerweise werden -jeweils bezogen auf das Futtermittel bzw. auf das Tränkwasser - bevorzugt zugesetzt:

| | |
|---|---|
| Mischfuttermitteln und deren Ausgangsprodukten (Getreide, Getreidenachprodukte, Produkte der Stärke-, Zucker- und Ölindustrie, pflanzliche und tierische Eiweißprodukte) | 0,2 bis 2,0 Gew.% |
| Flüssigfuttermitteln auf Basis Molke, Magermilch-pulver, Bierhefe, Melasse und/oder Wasser | 0,2 bis 1,5 Gew.% |
| Tränkwasser | 0,1 bis 1,5 Gew.%. |

Zu den erfindungsgemäßen Futtermitteln gehören auch Futtermittelvorgemische und Futtermittelkonzentrate.

Die Einzelkomponenten des erfindungsgemäßen Mittels können in weiten Bereichen variieren. So kann das erfindungsgemäße Mittel -wenn es als Vierkomponentenmischung vorliegt -beispielsweise 10 bis 50 Gew.% 1,2-Propandiolbisformiat, 5 bis 30 Gew.% 1,2-Propandiol-1-formiat und 5 bis 25 Gew.% 1,2-Propandiol-2-formiat, sowie 15 bis 45 Gew.% 1,2-Propandiol, enthalten, wobei die Summe der Bestandteile insgesamt 100 Gew.% ergibt.

Es lassen sich ferner übliche Zusätze für Futtermittel bzw. Tränkwasser zusetzen. Diese können entweder dem Futtermittel bzw. Tränkwasser direkt zugesetzt werden oder aber dem erfindungsgemäßen Mittel.

Die Erfindung wird durch die nachstehenden Beispiele weiter erläutert.

Beispiel 1

1,2-Propandiol wurde mit Kohlenmonoxid und katalytischen Mengen Natriummethanolat bei 250 bar und 50°C zu einem Ameisensäureestergemisch Ameisensäureester umgesetzt und destilliert. Man erhielt eine klare Flüssigkeit der Zusammensetzung 31,4 % 1,2-Propandiolbisformiat, 20,4 % 1,2-Propandiol-1-formiat und 16,8 % 1,2-Propandiol-2-formiat sowie 31,4 % 1,2-Propandiol.

Das folgende Versuchsergebnis belegt die antimikrobielle Wirkung der erfindungsgemäßen Mischung gegen verschiedene Enterobacteriaceen:

In mit Enterobacteriaceen-Kulturen befüllte Teströhrchen wurden die Prüfsubstanzen als wäßrige Lösung zugesetzt und eingemischt. 24 Stunden später wurde das bakterielle Wachstum mikroskopisch ausgezählt und beurteilt:

3

| Prüfsubstanzen | Bakterielles Wachstum 24 Stunden nach Zusatz der Prüfsubstanz | | |
|---|---|---|---|
| | E. coli | Proteus vulg. | Serratia spp. |
| Kontrolle | 3 | 3 | 3 |
| Ameisensäure 0,1 % | 0 | 0 | 0 |
| 0,3 % | 0 | 0 | 0 |
| Propionsäure 0,1 % | 1 | 1 | 1 |
| 0,3 % | 0 | 0 | 0 |
| erfindungsgemäße Mischung 0,1 % | 0 | 0 | 0 |
| 0,3 % | 0 | 0 | 0 |

0 = kein bakterielles Wachstum
1 = schwaches bakterielles Wachstum
2 = reduziertes bakterielles Wachstum
3 = volles bakterielles Wachstum

Beispiel 2

92 g Glycerin, 690 g Ameisensäure, eine katalytische Menge $H_2SO_4$ und 500 g Diisopropylether wurden 60 h unter Rückfluß gekocht. Man trennte portionsweise das Reaktionswasser ab. Nach der Veresterung wurde das Lösungsmittel und die überschüssige Ameisensäure abdestilliert, der Rückstand im Vakuum fraktioniert. Man erhielt 117,7 g Glycerinformiat, das sich zu 0,8 % aus freier Ameisensäure, 46 % Bisformiaten (Gemisch aus 1,2- und 1,3-Estern) sowie 53 % Glycerintrisformiat zusammensetzte.

Mit folgenden Versuchsergebnissen wurde analog Beispiel 1 die mikrozide Wirksamkeit gegenüber Enterobacteriaceen (A = E. Coli, B = Proteus, C = Serratia) belegt. Die Teströhrchen mit dem Kulturmedium wurden 24 Stunden nach Zugabe des erfindungsgemäßen Glycerinformiats ausgezählt und das bakterielle Wachstum beurteilt:

| Prüfsubstanzen | | Bakterielles Wachstum 24 Stunden nach Zusatz der Prüfsubstanz | | |
| --- | --- | --- | --- | --- |
| | | E. coli | Proteus vulg. | Serratia spp. |
| Kontrolle | | 3 | 3 | 3 |
| Ameisensäure | 0,1 % | 0 | 0 | 0 |
| | 0,3 % | 0 | 0 | 0 |
| Propionsäure | 0,1 % | 1 | 1 | 1 |
| | 0,3 % | 0 | 0 | 0 |
| Glycerin-formiat | 0,1 % | 0 | 0 | 0 |
| | 0,3 % | 0 | 0 | 0 |

0 = kein bakterielles Wachstum

1 = schwaches bakterielles Wachstum

2 = reduziertes bakterielles Wachstum

3 = volles bakterielles Wachstum

**Ansprüche**

1. Futtermittel oder Tränkwasser für Tiere, dadurch gekennzeichnet, daß es eine biozid oder biostatisch wirksame Menge an mindestens einem Ameisensäureester des 1,2-Propandiols enthält.

2. Futtermittel oder Tränkwasser nach Anspruch 1, dadurch gekennzeichnet, daß es mindestens einen der folgenden Ameisensäureester
1,2-Propandiolbisformiat,
1,2-Propandiol-1-formiat,
1,2-Propandiol-2-formiat
enthält.

3. Futtermittel oder Tränkwasser nach einem der Ansprüche 1 oder 2, dadurch gekennzeichnet, daß es zusätzlich 1,2-Propandiol enthält.

4. Futtermittel oder Tränkwasser nach einem der Ansprüche 1 bis 3, dadurch gekennzeichnet, daß es in Mischung
1,2-Propandiolbisformiat,
1,2-Propandiol-1-formiat,
1,2-Propandiol-2-formiat und
1,2-Propandiol
enthält.

5. Futtermittel oder Tränkwasser nach einem der Ansprüche 1 bis 4, dadurch gekennzeichnet, daß es mindestens einen der genannten Ameisensäureester, sowie gegebenenfalls 1,2-Propandiol in Mischung in einer Gesamtmenge von 0,1 bis 2 Gew.%, bezogen auf das Gesamtgewicht des Futtermittels bzw. Tränkwassers, enthält.

6. Mittel als Zusatz zu Futtermittel oder Tränkwasser, enthaltend mindestens einen Ameisensäureester des 1,2-Propandiols, sowie gegebenenfalls übliche Zusätze.

7. Mittel nach Anspruch 6, <u>dadurch gekennzeichnet</u>, daß es mindestens einen der folgenden Ameisensäureester

1,2-Propandiolbisformiat,

1,2-Propandiol-1-formiat,

1,2-Propandiol-2-formiat

enthält.

8. Mittel nach einem der Ansprüche 6 oder 7, <u>dadurch gekennzeichnet</u>, daß es zusätzlich 1,2-Propandiol enthält.

9. Mittel nach einem der Ansprüche 6 bis 8, <u>dadurch gekennzeichnet</u>, daß es

1,2-Propandiolbisformiat,

1,2-Propandiol-1-formiat,

1,2-Propandiol-2-formiat und

1,2-Propandiol

enthält.

10. Mittel nach einem der Ansprüche 6 bis 9, erhältlich durch Carbonylierung von 1,2-Propandiol.

11. Mittel nach einem der Ansprüche 1 bis 10, <u>dadurch gekennzeichnet</u>, daß es zusätzlich Ameisensäuremono-, di-oder -triglycerinester, einzeln oder in Mischung, enthält.

12. Verwendung von mindestens einem Ameisensäureester des 1,2-Propandiols in Futtermittel oder Tränkwasser für Tiere zur Reduzierung schädlicher Mikroorganismen.

13. Verwendung nach Anspruch 12 von mindestens einem der folgenden Ameisensäureester

1,2-Propandiolbisformiat,

1,2-Propandiol-1-formiat,

1,2-Propandiol-2-formiat.

14. Verwendung nach einem der Ansprüche 12 oder 13, <u>dadurch gekennzeichnet</u> , daß man zusätzlich 1,2-Propandiol einsetzt.

15. Verwendung nach einem der Ansprüche 12 bis 14, <u>dadurch gekennzeichnet</u> , daß man in Mischung

1,2-Propandiolbisformiat,

1,2-Propandiol-1-formiat,

1,2-Propandiol-2-formiat und

1,2-Propandiol

einsetzt.

16. Verwendung nach einem der Ansprüche 12 bis 15, <u>dadurch gekennzeichnet</u>, daß man zusätzlich Ameisensäuremono-, di-oder -triglycerinester, einzeln oder in Mischung, verwendet.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-C- 660 160 (I.G. FARBENINDUSTRIE)<br>* Ansprüche * | 1,6,12 | A 23 K 3/00 |
| | --- | | |
| Y | DE-A-2 412 834 (DEUTSCHE GOLD-UND SILBERSCHEIDEANSTALT vormals ROESSLER)<br>* Ansprüche 1-5; Seite 2, Zeilen 13-18; Beispiele 1-3 * | 1,6,12 | |
| | --- | | |
| Y | US-A-2 405 936 (E.P. BARTLETT)<br>* Beispiel 2 * | 1,6,12 | |
| A | | 2-4,7-10,13-15 | |
| | | | RECHERCHIERTE SACHGEBIETE (Int. Cl.4) |
| | --- | | |
| A | DE-A-2 449 657 (ICI)<br>* Anspruch 1 * | 1,6,12 | A 23 K |
| | --- | | |
| A | AGRICULTURAL AND BIOLOGICAL CHEMISTRY, Band 36, Nr. 13, 1972, Seiten 2473-2478, Tokyo, JP; M. YOSHIDA et al.: "Evaluation of nutritive value of glycol esters as energy source for growing chicks and rats"<br>* Seite 2473, Zusammenfassung * | 1 | |
| | ---     -/- | | |

Der vorliegende Recherchenbericht wurde für alle Patentansprüche erstellt.

| Recherchenort | Abschlußdatum der Recherche | Prüfer |
|---|---|---|
| DEN HAAG | 25-02-1987 | DEKEIREL M.J. |

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 204 824 (ESSO RESEARCH AND ENGINEERING CO.) * Ansprüche 1,3 * | 1,5 | |
| | --- | | |
| A | DE-A-2 653 448 (BP CHEMICALS) * Anspruch 1 * | 1 | |
| | ----- | | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 25-02-1987 | DEKEIREL M.J. |